# EUROPÄISCHE PATENTSCHRIFT

(11) **EP 0 803 200 B1**
(45) Veröffentlichungstag und Bekanntmachung des Hinweises auf die Patenterteilung: **12.06.2002**
(21) Anmeldenummer: 97106376.3
(22) Anmeldetag: 17.04.1997
(51) Int. Cl.: A23K 3/03, A23L 3/3508, A23B 9/26

(54) **Zusammensetzung zum Haltbarmachen von Futtermitteln, Verfahren zu ihrer Herstellung und ihre Verwendung**
Composition for preserving fodder, process for its preparation and use thereof
Composition pour la conservation de fourrages, procédé pour sa préparation et son utilisation

(30) Priorität: 25.04.1996 DE 19616462
(43) Veröffentlichungstag der Anmeldung: 29.10.1997
(73) Patentinhaber: ADDCON Agrar GmbH, 53113 Bonn (DE)
(72) Erfinder: Reuter, Burkhard, Dr., 47638 Stralen (DE); Kochannek, Bernd, Dipl. Ing. Agr., 53340 Meckenheim (DE)
(74) Vertreter: Schwarz, Klaus-Jürgen, Dipl.-Ing.

(56) Entgegenhaltungen:
- WO-A-93/16603
- WO-A-93/16611
- DD-A- 125 576
- DE-A- 1 921 670
- GB-A- 2 095 534
- US-A- 4 401 624

## Beschreibung

Die vorliegende Erfindung betrifft eine Zusammensetzung zum Haltbarmachen von Futtermitteln, enthaltend Alkali- und/oder Erdalkalimetallsalze von Benzoesäure, Alkali- und oder Erdalkalimetallsalze von C₁-C₃-Carbonsäuren, Propionsäure und Wasser, ein Verfahren zu ihrer Herstellung sowie ihre Verwendung zum Haltbarmachen von Futtermitteln.

Futtermittel werden haltbar gemacht, d.h. konserviert, wenn der Wassergehalt so niedrig ist, daB eine Silierung bzw. Säuregärung nicht stattfinden kann oder nicht durchgeführt werden soll. Durch die Konservierung soll das Futtermittel gegen Befall von Schimmelpilzen, Bakterien und Hefen geschützt werden. Besonders bedeutsam ist der Schutz gegen Schimmelpilze, da diese Mycotoxine wie beispielsweise Aflatoxin bilden, welche für die mit dem Futter versorgten Tiere und im weiteren Verlauf der Nahrungskette auch für Fleischkonsumenten giftig sind.

Als Konservierungsmittel für Futtermittel hauptsächlich zur Verhindeung von Verschimmeln wird bisher hauptsächlich reine Propionsäure eingesetzt. Die Einsetzdosis liegt relativ hoch (3 - 20 l/t in Abhängigkeit vom Feuchtegehalt). Propionsäure ist jedoch aggressiv und stark ätzend und verursacht daher Korrosionsprobleme. Zudem weist Propionsäure einen hohen Dampfdruck auf, was starke Geruchsbelästigung und Gefahren durch Entstehung von Überdruck bei der Handhabung der Behälter bedingt.

Der Einsatz der weniger korrosiven Neutralsalze (Propionate) zur Futterkonservierung ist bekannt, für nichtgärende Substrate aber nicht geeignet.

Benzoesäure wirkt deutlich stärker fungizid als Propionsäure. Benzoesäure ist aber nicht wasserlöslich und daher nur als Feststoff zu applizieren. Daher ist sie für relativ trockene Futtermittel nicht geeignet. Die Salze der Benzoesäure sind besser löslich als die Säure selbst, aber ebenfalls in nichtgärenden Substraten wenig effektiv, da ihre Wirkung stark pH-abhängig ist.

Natriumbenzoat und anderen Alkali- und Erdalkalibenzoate werden im großen Umfang als Siliermittel eingesetzt. D.h., insbesondere Grünfuttermittel und auch Getreide mit einem hohen Feuchtigkeitsgehalt werden unter Verwendung von Benzoaten einer Fermentierung unterworfen. Als Konservierungsstoffe für nichtgärende Futtermittel sind Benzoate bzw. Benzoesäure bisher nicht verwendet worden.

WO 93/16611 beschreibt eine flüssige Konservierungszusammensetzung für die Konservierung von Grünfutter, die als aktiven Bestandteil Benzoesäure oder ein Derivat davon sowie Propionsäure im Gemisch mit Ameisensäure und/oder Essigsäure enthält. Die beschriebene Zusammensetzung enthält 60 - 95 Gew.% eines Gemisches aus Propionsäure und Ameisensäure, Propionsäure und Essigsäure oder Propionsäure, Ameisensäure und Essigsäure sowie 5 - 25 Gew.% Benzoesäure oder deren Salze und gegebenenfalls aliphatische C₄-C₁₀ Monocarbonsäuren oder deren Ester oder C₁₀-C₂₀ Fettsäuren oder deren Derivate, Alkohole, Polyalkohole und/oder Verdickungsmittel und gegebenenfalls bis zu 30 Gew.% Wasser. Durch den hohen Anteil an organischen C₁-C₃-Säuren ist diese Zusammensetzung ebenfalls stark korrosiv. Ein hoher Anteil an Ameisensäure wird als besonders vorteilhaft herausgestellt. Es ist bekannt, daß Benzoesäure im Gemisch mit so hohem Säureanteil gut löslich ist. Erst bei Säureanteilen von weniger als 60 Gew.% treten leicht Ausfällungen auf. Ameisensäure und Essigsäure allein wirken kaum fungizid.

SU-1697296 beschreibt ein Zusatzmittel für die Futterkonservierung, bestehend aus 9,5 - 16,0 Gew.% Natriumbenzoat, 25,5 - 39,0 Gew.% "Reaktionswasser", welches unter anderem Ameisensäure, Essigsäure, Benzoesäure, Formaldehyd, Alkohole, C₄-C₂₀-Fettsäuren bzw. deren Ester, Schwermetallspuren und Wasser enthält, sowie 55 - 65 % Propionsäure. Auch diese Zusammensetzung ist wegen des hohen Propinsäureanteils sehr korrosiv.

US-3,600,198 offenbart eine Zusammensetzung zum Konservieren von Fisch, die aus einer gepufferten Lösung von Propionsäure und Natriumproprionat im Gemisch mit einer gepufferten Lösung aus Benzoesäure und Benzoat mit einem pH von weniger als 7 in Wasser besteht, wobei der Wasseranteil 80 - 99,5 Gew.% bezogen auf die Gesamtlösung beträgt. Das Substrat Fisch weist einen hohen Wasser- und Eiweißgehalt auf, wobei verglichen mit Futtermitteln andere Verderbprozesse ablaufen. In erster Linie ist hier bakterieller Eiweißabbau zu nennen. Diese Zusammensetzung ist daher für das Haltbarmachen von Futtermitteln ungeeignet.

GB-A-2 095.534 beschreibt eine Zusammensetzung zum Konservieren von Grünfutter, die einen pH-erniedrigenden Bestandteil und Benzoesäure oder Benzoat enthält. Als pH-erniedrigender Bestandteil wird Ameisensäure bzw. Salzsäure genannt. Wasser als Lösungmittel für die Zusammensetzung ist nicht offenbart. Die Zusammensetzung wird bevorzugt als maximal homogene Suspension unter Verwendung von Verdickern und Geliermitteln hergestellt und eingesetzt.

Die Aufgabe der vorliegenden Erfindung besteht darin, eine Zusammensetzung zum Haltbarmachen von Futtermitteln zur Verfügung zu stellen, die eine verbesserte Wirkung gegen Schimmelpilze, Hefen und Bakterien aufweist und weniger korrosiv ist als übliche Konservierungsmittel für Futtermittel.

Es hat sich überraschenderweise gezeigt, daß bei kombiniertem Einsatz von Benzoesäure bzw. Benzoat, Salzen von C₁-C₃-Carbonsäuren und Propionsäure in einer hochkonzentrierten Lösung eine überraschend gute Wirkung gegen Schimmelpilze, Hefen und Bakterien bei der Konservierung von Futtermitteln erzielt werden kann.

Benzoesäure ist bekannterweise sehr schwer wasserlöslich. Bei Vermischen einer verdünnten Lösung von Natriumbenzoat mit Propionsäure fällt die Benzoesäure üblicherweise aus. Es wurde jetzt gefunden, daß auf bestimmte Weise eine Lösung erhalten werden kann, die hohe Konzentrationen an Benzoat und Propionsäure aufweist. Diese Lösung ist hoch wirksam bei der Konservierung von Futtermitteln und weist gegenüber üblichen Konsiervierungslösungen ein geringes Volumen auf, was die Handhabung und den Transport vereinfacht und verbilligt.

Die vorstehend genannte Aufgabe wird gelöst durch eine Zusammensetzung zum Haltbarmachen von Futtermitteln, enthaltend
a) 5 - 41 Gew.% Alkali- und/oder Erdalkalimetallsalze von Benzoesäure, jeweils berechnet als Natriumsalze,
b) 1 - 14 Gew.% Alkali- und/oder Erdalkalimetallsalze von C₁-C₃-Carbonsäuren, jeweils berechnet als Natriumsalze,
c) 10 - < 59 Gew.% Propionsäure, berechnet als reine Propionsäure und
d) > 30 - < 80 Gew.% Wasser,
wobei die Gesamtmenge aller Bestandteile a) bis d) 100 Gew.% beträgt und die Summe aus b) und c) kleiner ist als 60 Gew.%, und wobei sich alle Gew.%-Angaben auf die Gesamtmenge aller Komponenten a) bis d) beziehen.

Eine bevorzugte Ausführungsform der Zusammensetzung enthält
a) 13 - 30 Gew.% Alkali- und/oder Erdalkalimetallsalze von Benzoesäure, jeweils berechnet als Natriumsalze,
b) 3 - 7 Gew.% Alkali- oder Erdalkalimetallsalze von C₁-C₃ Carbonsäuren, jeweils berechnet als Natriumsalze,
c) 34 - 53 Gew.% Propionsäure und
d) 25 - 55 Gew.% Wasser,
wobei die Summe aller Bestandteile a) bis d) 100 Gew.% beträgt und die Summe aus b) und c) kleiner ist als 60 Gew.%, und alle Gew.% sich auf die Gesamtmenge aller Komponenten a) bis d) beziehen.

Eine besonders bevorzugte Zusammensetzung enthält
a) 13 - 18 Gew.% Natriumbenzoat
b) 3 - 7 Gew.% Natriumpropionat
c) 37 - 50 Gew.% Propionsäure und
d) 45 - 52 Gew.% Wasser.

Die erfindungsgemäße Lösung wird hergestellt durch ein Verfahren, dadurch gekennzeichnet, daß man
i) eine wäßrige Lösung mit d) einem Wasseranteil von > 30 - < 80 Gew.% herstellt, welche a) 5 - 41 Gew.% Alkali- und/oder Erdalkalimetallsalze von Benzoesäure und b) 1 - 14 Gew.% Alkaliund/oder Erdalkalimetallsalze von C₁-C₃-Carbonsäuren enthält, jeweils berechnet als Natriumsalze, und
ii) diese Mischung unter Vermischen zu c) 10 - 59 Gew.% konzentrierter Propionsäure gibt,
wobei die Gesamtmenge aller Bestandteile a) bis d) 100 Gew.% beträgt und die Summe aus b) und c) kleiner ist als 60 Gew.% und wobei sich alle Gew.%-Angaben auf die Gesamtmenge aller Komponenten a) bis d) beziehen.

In einer bevorzugten Ausführungsform des erfindungsgemäßen Verfahrens werden die Salzlösung i) und die konzentrierte Propionsäure ii) im Volumenverhältnis 90:10 bis 50:50 eingesetzt, bevorzugt im Volumenverhältnis 60:40.

In einer bevorzugten Ausführungsform des erfindungsgemäßen Verfahrens wird eine wäßrige Lösung aus 261 g Natriumbenzoat und 95 g Natriumproprionat pro 1000 ml Wasser zu konzentrierter Propionsäure gegeben, wobei 60 Vol. % der wäßrigen Lösung und 40 Vol. % Propionsäure, jeweils bezogen auf die Gesamtmenge der beiden Lösungen, verwendet werden.

Weiterhin betrifft die vorliegende Erfindung die Verwendung der beanspruchten Zusammensetzung zum Haltbarmachen von Futtermitteln.

Die erfindungsgemäße Zusammensetzung ist für die Getreidekonservierung bzw. die Konservierung von Trockenfuttermitteln wie beispielsweise Heu geeignet. Solche Substrate werden üblicherweise mit Restfeuchten von weniger als 25% gelagert. Es findet in diesem Fall keine Gärung (Silierung) statt. Bei Restfeuchten von mehr als 14% verderben solche Futtermittel durch Verschimmeln.

Die vorliegende Erfindung beruht auf der Tatsache, daß stabile Propionsäure/Benzoat-Lösungen mit einem Propionsäureanteil von weniger als 59 Gew. % nur durch Verwendung von weitgehend gesättigten wäßrigen 8enzoat-Lösungen erhalten werden können. Die Stabilität dieser Mischungen ist wiederum nur dann sichergestellt, wenn die wäßrige Benzoat-Lösung die vorstehend genannten Mengen an Alkali- und/oder Erdalkalisalzen von C₁-C₃-Carbonsäuren und Benzoat enthält.

Wenn die Gesamtzusammensetzung mehr als 41 Gew.% Benzoat enthält, treten Ausfällungen auf. Bei weniger als 5 Gew.% Benzoatanteil ist keine ausreichende Konservierungswirkung zu erzielen.

Bei Einsatz von mehr als 14 Gew.% C₁-C₃-Salzen läßt sich keine verbesserte Wirkung der Zusammensetzung feststellen, während bei Verwendung von weniger als 1 Gew.% Ausfällungen auftreten.

Eine Überschreitung des Propionsäureanteils von >59 % läßt keine Verbesserung der Konservierungswirkung und der Produkteigenschaften gegenüber konzentrierter Propionsäure erkennen. Bei einer Unterschreitung von 10 % Propionsäure tritt Ausfällung der gelösten Mischungskomponenten auf.

Wenn die Gesamtzusammensetzung weniger als 30 % Wasser enthält treten Ausfällungen auf, und aufgrund der größeren Propionsäuremenge können Korrosionsprobleme entstehen. Eine Überschreitung des Wassergehaltes von >80 % führt bei Kontakt mit der Propionsäure zum Ausfällen der Benzoesäure.

Als Alkali- bzw. Erdalkalimetallsalze von Benzoesäure sind Natrium-, Kalium-, Cäsium-, Lithium-, Magnesium-, Kalzium-, Barium-, und Ammoniumsalze geeignet. Bevorzugt werden Natriumbenzoat und Ammoniumbenzoat eingesetzt, da diese Salze gut wasserlöslich sind.

Als Alkali- bzw. Erdalkalimetallsalze von C₁-C₃-Carbonsäuren sind die Natrium-, Lithium-, Kalium-, Cäsium-, Magnesium-, Kalzium-, Barium- und Ammoniumsalze von Propionsäure, Essigsäure und Ameisensäure geeignet.

Natriumsalze der genannten Säuren sind bevorzugt. Alkali- bzw. Erdalkalimetallsalze höherer Carbonsäuren sind für die erfindungsgemäße Zusammensetzung nicht geeignet, da bereits die C₄-Säure wegen der starken Geruchsbelästigung zum Konservieren von Futter nicht einsetzbar ist.

Die angegebenen Mengen an Benzoat und Salzen von C₁-C₃-Säuren sind berechnet als Natriumsalze angegeben. Bei Messung in schwach saurer Lösung durch gaschromatographische Säureanalyse wird Propionat, Formiat und Acetat als Säure bestimmt; der Salzanteil kann anschließend über die Natriumbestimmung berechnet werden. Die vorstehend genannten Angaben für Natriumsalze können in die entsprechenden Anteile, berechnet als Säuren, umgerechnet werden. 5 - 41 Gew. % Natrium-Benzoat entsprechen z.B 4,2 - 34,7 Gew.% Benzoesäure. 1 - 14 Gew. % Natrium-C₁-C₃-Salze entsprechen 0,8 - 10,8 Gew.% Propionsäure, 0,7 - 9,5 Gew.% Ameisensäure bzw. 0,7 -10,2 Gew.% Essigsäure.

Konzentrierte Propionsäure ist handelsübliche 99-%ige Propionsäure. Es wird bevorzugt technische Futtermittelqualität eingesetzt. Wasser ist übliches Leitungswasser.

Als zu konservierende Futtermittel sind alle nicht fermentierenden Futtermittel geeignet, insbesondere Getreide, Futtergetreide, Feuchtgetreide mit mehr als 14% Feuchtegehalt, Heu, Halbheu, Körnermais, Maisprodukte wie geschrotete Maiskörner, industrielles Mischfutter (enthält unter anderem Leguminosen, Soja, Zuckerrübenschnitzel, Getreide und andere Bestandteile) geeignet.

Als Feuchtegehalt wird der Trocknungs- bzw. Gewichtsverlust bei Trocknungstemperaturen von 60 - 105°C verstanden. Futtermittel mit Restfeuchten >14 % sind nicht lagerfähig. Ein Haltbarmachen durch Säuregärung bzw. Fermentierung ist erst ab Feuchtegehalten von >35 % möglich.

Die erfindungsgemäßen Zusammensetzungen haben pH-Werte von mehr als 4,8.

Sie sind daher deutlich weniger sauer als die vorstehend genannten bekannten Zusammensetzungen mit Säureanteilen von 60 - 96 Gew.%, deren pH-Wert im Bereich von 2 bis 4 liegt. Die beanspruchte Mischung ist daher deutlich weniger korrosiv und ätzend als die bekannten Mischungen mit hohem Säureanteil.

Durch die nachstehend beschriebenen Beispiele konnte bezeigt werden, daß mit der beanspruchten Zusammensetzung ein überraschender synergistischer Effekt hinsichtlich der Wirkung gegen Schimmelpilze erzielt wird. Obwohl die für reine Propionsäure empfohlene Dosismenge um bis zu 60% unterschritten wird, und die verwendete Natriumbenzoatmenge weit unterhalb der für Schimmelpilze bekannten minimalen Hemmkonzentration (2000 - 5000 ppm bei pH 5 nach Lück, 1995) liegt, weist die beanspruchte Zusammensetzung einen Hemmeffekt für die Bildung von Schimmelpilzen auf, der vergleichbar oder besser ist als der durch reine Propionsäure erzielte Effekt. Durch die nachstehend beschriebenen Beispiele konnte ebenfalls gezeigt werden, daß allein die Zugabe der Propionsäurekomponente in einer Menge von 2 -4 l/t keine ausreichende fungizide Wirkung hat, sondern daß eine ausreichende Wirkung erst durch die Kombination von Propionsäure mit dem Benzoat-Propionat-Gemisch erzielt wird.

Die Herstellung der erfindungsgemäßen Zusammensetzung erfolgt in zwei Stufen. Zunächst wird eine Alkali- oder Erdalkalimetallsalze von Benzoesäure und C₁-C₃-Carbonsäuren enthaltende Salzlösung hergestellt. Diese wird dann zu konzentrierter Propionsäure gegeben. Die Reihenfolge der Zugabe ist nicht austauschbar. Die Säure muß unbedingt vorgelegt werden, da anderenfalls die Salze sofort ausfallen würden.

Bevorzugt enthält die Salzlösung 261 g Natrium-Benzoat (entsprechend 222 g Benzoesäure), d.h. 23 Gew.% Natrium-Benzoat, und 95 g Natriumpropionat (entsprechend 73 g Propionsäure), d.h. 8,4 Gew.% Natrium-Propionat. Die Dichte dieser Salzlösung beträgt ca. 1,133 kg/l. Der Wasseranteil dieser bevorzugten Salzlösung beträgt ca. 68 Gew.%.

Das Mischungsverhältnis der Salzlösung mit Propionsäure beträgt nach Volumen 90:10 bis 50:50, wobei 60:40 bevorzugt ist. Das heißt, die Salzlösung, enthaltend Benzoat und Propionat, wird bevorzugt im Verhältnis 3:2 mit konzentrierter Propionsäure gemischt, wobei die oben genannte Mischungsreihenfolge eingehalten werden muß. Die Salzlösung wird dabei langsam zur Propionsäure gegeben, wobei Mischen z.B. durch Rühren erfolgt. Beim Mischungsverhältnis 60 : 40 wird die beste Dosiswirkung bei geringstem Propionsäureanteil erzielt.

Die so erhaltene Lösung ist gebrauchsfertig und enthält ca. 16 Gew.% Natriumbenzoat, ca. 6 Gew.% Natriumproprionat, ca. 40 Gew.% Propionsäure und ca. 40 Gew.% Wasser und wird vom Anwender nicht weiter verdünnt oder mit anderen Bestandteilen vermischt. Man kann zwar weitere Propionsäure zugeben, ohne daß Benzoat ausfällt, ein hoher Propionsäure-Anteil in der Gebrauchslösung soll aber gerade vermieden werden. Eine weitere Zugabe von Natriumbenzoat zur fertigen Lösung ist bis zu einer Gesamtkonzentration von 30 Gew.% Natriumbenzoat möglich. Erhöhte Benzoatkonzentrationen zeigen aber keine erhöhte Wirkung der Zusammensetzung beim Konservieren von Futtermitteln. Die Lösung ist nicht mit Wasser mischbar. Bei Zusatz von Wasser treten sofort Ausfällungen auf.

Die erfindungsgemäß hergestellte klare stabile Lösung kann mit jeder gebräuchlichen Dosiertechnik für Flüssigkeiten im Futter verteilt werden.

Die Erfindung wird im folgenden durch Beispiele genauer beschrieben.

### Beispiel 1:

Es werden 3 verschiedene Salzlösungen mit folgenden Zusammensetzungen hergestellt:
A: 261 g Natriumbenzoat/Liter
B: 356 g Natriumbenzoat/Liter
C: 261 g Natriumbenzoat und 95 g Natriumpropionat/Liter.

Jede dieser Salzlösungen wird im Verhältnis 50:50 (nach Volumen) mit konzentrierter Propionsäure gemischt. Bei Verwendung von Lösung A und B erfolgt Ausfällung, während bei Verwendung der Lösung C gemäß der Erfindung eine klare Lösung erhalten wird. Die aus Salzlösung C und Propionsäure im Verhältnis 50:50 erhaltene Mischung C enthält 49,5 Gew.% Propionsäure, 13,1 Gew.% Natriumbenzoat und 4,8 Gew.% Natriumproprionat. Durch weitere Zugabe von Natriumbenzoat läßt sich die klare Lösung aus Propionsäure und Salzlösung bis zu einem Benzoat-Gehalt von 30 Gew.% aufkonzentrieren. Die Lösung enthält dann 30 Gew.% Natriumbenzoat, 37,9 Gew.% Propionsäure und 3,6 Gew.% Natriumpropionat.

### Beispiel 2:

Die Salzlösungen A, B und C aus Beispiel 1 werden jeweils im Verhältnis 60:40 mit konzentrierter Propionsäure gemischt. Die Salzlösung wird jeweils langsam unter Mischen zur konzentrierten Propionsäure gegeben. Die aus Salzlösung A und Salzlösung B erhaltene Gesamtlösung zeigt sofort Ausfällungen, wohingegen die aus Salzlösung C und Propionsäure erhaltene Lösung klar bleibt. Die durch Mischen von Propionsäure mit Salzlösung C erhaltene klare Lösung enthält 39,6 Gew.% Propionsäure, 15,7 Gew.% Natriumbenzoat und 5,7 Gew.% Natriumpropionat. Durch weitere Zugabe von Natriumbenzoat läßt sich diese Lösung bis zu einem Benzoatgehalt von 30 Gew.% aufkonzentrieren. Diese Lösung enthält dann 30 Gew.% Natriumbenzoat, 34,4 Gew.% Propionsäure und 4,9 Gew.% Natriumpropionat.

### Beispiel 3:

Im folgenden Beispiel wird die Wirksamkeit einer erfindungsgemäßen Mischung bei der Konservierung von Getreide und von Trockenfutterstoffen gezeigt. Bisher wird für die Konservierung solcher Futterstoffe ausschließlich Propionsäure (99%ig) verwendet.

Empfehlungsdosis (BASF): Feuchte bei 3 bis 6 Monaten Lagerung

| Feuchte % | Lagerung (l/t) |
|---|---|
| 16 | 5,0 |
| 20 | 6,5 |
| 26 | 9,5 |

Bei diesen Dosierungen handelt es sich um Mindestmengen. Jede Unterschreitung der Empfehlungsdosis birgt die Gefahr der Umwirksamkeit bzw. eines selektiven Schimmelwachstums, da Propionsäure auch das Wachstum von Bakterien, Hefen und Schimmelpilzen begünstigen kann.

Im folgenden Beispiel wird daher gezeigt, daß ein teilweiser Ersatz der notwendigen Propionsäuremenge durch eine sicher fungizid wirkende Substanz wie zum Beispiel Natriumbezoat möglich ist.

Gerste als Feuchtgetreide wurde unter aeroben Bedingungen unter Zusatz von
a) 99%iger Propionsäure bzw.
b) dem erfindungsgemäßen Gemisch aus Propionsäure:Salzlösung (pro Liter Salzlösung 261g Natriumbenzoat und 95g Natriumpropionat) im Mischungsverhältnis 40:60 (entspricht Gemisch aus Salzlösung C und Propionsäure aus Beispiel 2)
gelagert. Es wurde Getreide mit A) 17,8% Feuchte und B) 21,5% Feuchte verwendet.

Die Infektionsrate IR (%) wurde nach der Methode von M. Kwella und F. Weissbach, Zbl. Mikrobiol. 139 (1984), 453-462 bestimmt. Die Infektionsrate IR (%) drückt aus, wieviel von hundert untersuchten Getreidekörnern mit Lagerpilzen (Schimmel) befallen sind. Dabei werden die Schimmelpilze auch nach Arten differenziert, so daß auch Infektionsraten von mehr als 100% möglich sind, wenn sich mehrere Schimmelarten auf einem Korn angesiedelt haben.

Die Ergebnisse der Versuche sind in der folgenden Tabelle dargestellt.

| Lagerdauer (Wochen) | A | | | | | B | | | | |
|---|---|---|---|---|---|---|---|---|---|---|
| | Zusatz ohne | a | | b | | Zusatz ohne | a | | b | |
| (l/t) | 0 | 5 | 10 | 5 | 10 | 0 | 5 | 10 | 5 | 10 |
| | (IR % Infektion Lagerpilze) | | | | | | | | | |
| 1 | 0 | 0 | 0 | 0 | 0 | 52 | 0 | 0 | 0 | 0 |
| 4 | 87 | 1 | 0 | 0 | 0 | 113 | 0 | 0 | 0 | 0 |
| 8 | 99 | 0 | 0 | 0 | 0 | 112 | 0 | 0 | 0 | 0 |
| 12 | 101 | 0 | 0 | 0 | 0 | 137 | 0 | 0 | 0 | 0 |

Auch beim Zusatz der erfindungsgemäßen Zusammensetzung nach Variante b) waren alle Lagerproben schimmelfrei, obwohl die zur sicheren Konservierung notwendige Dosis an Propionsäure bis zu 60% unterschritten wurde. Die mit der erfindungsgemäßen Mischung nach Variante b) applizierte Natriumbenzoatmenge (480 - 960 ppm) liegt weit unterhalb der für Schimmelpilze bekannten minimalen Hemmkonzentration (2000 - 5000 ppm bei pH 5 nach Lück 1995). Der daraus erkennbare Kombinationseffekt zeigt die synergistische Wirkung von Propionsäure und Benzoat und ist bisher in der Literatur nicht beschrieben worden.

### Beispiel 4:

Gerste wurde als Feuchtgetreide mit 21,5% Feuchte unter aeroben Bedingungen gelagert. Als Zusätze wurden
a) 2 l/t 99%ige Propionsäure bzw.
b) 5 l/t erfindungsgemäße Zusammensetzung (Propionsäure:Salzlösung (262g Natriumbenzoat und 95g Natriumpropionat pro Liter Salzlösung) im Mischungsverhältnis 40:60) entsprechend Mischung C aus Beispiel 2 verwendet. Die Infektionsrate wurde wie im Beispiel 3 bestimmt. Die Ergebnisse sind in der folgenden Tabelle dargestellt.

| Lagerdauer (Wochen) | Zusatz ohne | a | b |
|---|---|---|---|
| | (IR % Infektion Lagerpilze) | | |
| 3 | 98 | 98 | 0 |

Aus der Tabelle ergibt sich eindeutig, daß die alleinige Zugabe der Propionsäurekomponente in einer Menge von 2 l/t keine ausreichende Wirkung hat. In diesem Dosisbereich stellt sich ein infektionsverhindernder Effekt erst durch die Kombination von Propionsäure mit dem Benzoat-Propionat-Gemisch entsprechend der erfindungsgemäßen Zusammensetzung ein.

## Patentansprüche

1. Zusammensetzung zum Haltbarmachen von Futtermitteln, enthaltend
a) 5 - 41 Gew.% Alkali- und/oder Erdalkalimetallsalze von Benzoesäure, jeweils berechnet als Natriumsalze,
b) 1 - 14 Gew.% Alkali- und/oder Erdalkalimetallsalze von C₁-C₃-Carbonsäuren, jeweils berechnet als Natriumsalze,
c) 10 - < 59 Gew.% Propionsäure, berechnet als reine Propionsäure, und
d) > 30 - < 80 Gew.% Wasser,
wobei die Gesamtmenge aller Bestandteile a) bis d) 100 Gew.% beträgt und die Summe aus b) und c) kleiner ist als 60 Gew.%, und wobei sich alle Gew.%-Angaben auf die Gesamtmenge aller Komponenten a) bis d) beziehen.

2. Zusammensetzung nach Anspruch 1, enthaltend
a) 13 - 30 Gew.% Alkali- und/oder Erdalkalimetallsalze von Benzoesäure, jeweils berechnet als Natriumsalze,
b) 3 - 7 Gew.% Alkali- oder Erdalkalimetallsalze von C₁-C₃-Carbonsäuren, jeweils berechnet als Natriumsalze,
c) 34 - 53 Gew.% Propionsäure und
d) 25 - 55 Gew.% Wasser.

3. Zusammensetzung nach Anspruch 1 oder Anspruch 2, enthaltend
a) 13 - 18 Gew.% Natriumbenzoat,
b) 3 - 7 Gew.% Natriumpropionat,
c) 37 - 50 Gew.% Propionsäure
d) 45 - 52 Gew.% Wasser.

4. Zusammensetzung nach einem oder mehreren der Ansprüche 1 - 3, **dadurch gekennzeichnet, daß** die Zusammensetzung eine klare Lösung ist.

5. Verfahren zur Herstellung einer Zusammensetzung zum Haltbarmachen von Futtermitteln, **dadurch gekennzeichnet, daß** man
i) eine wäßrige Lösung mit d) einem Wasseranteil von > 30 - < 80 Gew.% herstellt, die a) 5 - 41 Gew.% Alkali- und/oder Erdalkalimetallsalze von Benzoesäure und b) 1- 14 Gew.% Alkaliund/oder Erdalkalimetallsalze von C₁-C₃-Carbonsäuren, jeweils berechnet als Natriumsalze, enthält, und diese Mischung
ii) unter Vermischen zu
c) 10 - 59 Gew.% konzentrierter Propionsäure gibt,
wobei die Gesamtmenge aller Bestandteile a) bis d) 100 Gew.% beträgt und die Summe aus b) und c) kleiner ist als 60 Gew.%, und wobei sich alle Gew.%-Angaben auf die Gesamtmenge aller Komponenten a) bis d) beziehen.

6. Verfahren nach Anspruch 5, wobei das Mischungsverhältnis von i) zu ii) nach Volumen 90:10 bis 50:50, bevorzugt 60:40 beträgt.

7. Verwendung einer Zusammensetzung nach Ansprüchen 1-3 zum Haltbarmachen von Futtermitteln.

8. Verwendung nach Anspruch 7, wobei das Futtermittel ausgewählt wird aus der aus nicht fermentierendem Futter, insbesondere Getreide, Futtergetreide, Feuchtgetreide mit mehr als 14% Feuchtegehalt, Heu, Halbheu, Körnermais, Maisprodukten wie geschroteten Maiskörnern, und industriellem Mischfutter bestehenden Gruppe.

9. Verwendung nach Anspruch 7 oder Anspruch 8, wobei das Futtermittel gegen Schimmelpilze, Bakterien und Hefen geschützt wird.

10. Verwendung nach einem oder mehreren der Ansprüche 7 bis 9, wobei 2 - 10 l, bevorzugt 5 l der Zusammensetzung entsprechend den Ansprüchen 1 - 4 pro Tonne Futtermittel eingesetzt werden.

## Claims

1. Composition for preserving fodder containing
a) 5 - 41% by weight alkali and/or alkaline earth metal salts of benzoic acid, respectively calculated as sodium salts,
b) 1 - 14 % by weight alkali and/or alkaline earth metal salts of C₁ - C₃ carboxylic acids, respectively calculated as sodium salts,
c) 10 - < 59 % by weight propionic acid, calculated as pure propionic acid and
d) > 30 - < 80 % by weight water,
wherein the total amount of all components a) through d) is 100% by weight, and the sum of b) and c) is smaller than 60 % by weight, and wherein all parameters stated in % by weight are related to the total amount of all the components a) through d).

2. Composition according to claim 1 containing
a) 13 - 30% by weight alkali and/or alkaline earth metal salts of benzoic acid, respectively calculated as sodium salts,
b) 3 - 7 % by weight alkali and/or alkaline earth metal salts of C₁ - C₃ carboxylic acids, respectively calculated as sodium salts
c) 34 - 53% by weight propionic acid and
d) 25 - 55% by weight water.

3. Composition according to claim 1 or 2 containing
a) 13 - 18% by weight sodium benzoate,
b) 3 -7% by weight sodium propionate,
c) 37 - 50% by weight propionic acid,
d) 45 - 52% by weight water.

4. Composition according to one or more of the claims 1 - 3, **characterized in that** the composition is a clear solution.

5. Process for preparing a composition for preserving fodder, **characterized by**
i) preparing an aqueous solution having d) a water content of > 30 - < 80 % by weight, which solution contains a) 5 - 41% by weight alkali and/or alkaline earth metal salts of benzoic acid and b) 1 -14% by weight alkali and/or alkaline earth metals salts of C₂ - C₃ carboxylic acids, respectively calculated as sodium salts, and adding this mixture
ii) while mixing to
c) 10 - 59% by weight concentrated propionic acid,
wherein the total amount of all components a) through d) is 100% by weight, and the sum of b) and c) is smaller than 60 % by weight, and all parameters given in % by weight are related to the total amount of all the components a) through d).

6. Process according to claim 5, wherein the mixing ratio of 1) : ii) is 90:10 to 50:50, preferably 60:40 by volume.

7. Use of a composition according to claims 1 - 3 for preserving fodder.

8. Use according to claim 7, wherein the fodder is selected from the group consisting of non-fermenting fodder, in particular grain, fodder grain, silage grain having a moisture content higher than 14%, hay, silage hay, grainy corn, corn products like coarsely ground corn grains, and industrial concentrated feed stuff.

9. Use according to claim 7 or 8, wherein the fodder is protected against mould fungus, bacteria and yeast.

10. Use according to one or more of the claims 7 to 9, wherein 2 - 10 l and preferably 5 l of the composition according to claims 1 - 4 are used for each ton of fodder.

## Revendications

1. Composition pour la conservation de fourrages contenant
a) de 5 à 41 % en poids de sels de métaux alcalins et/ou de sels de métaux alcalinoterreux d'acide benzoïque, calculés respectivement comme sels de sodium,
b) de 1 à 14 % en poids de sels de métaux alcalins et/ou de sels de métaux alcalinoterreux d'acides carboxyliques à C₁ à C₃, calculés respectivement comme sels de sodium,
c) de 10 à < 59 % d'acide propionique, calculés comme acide propionique pur et
d) > 30 à < 80 % en poids d'eau.
la quantité totale de tous les composants a) à d) se montant à 100 % en poids et la somme de b) et c) étant inférieure à 60 % en poids et toutes les indications de pourcentages en poids se rapportant à la quantité totale de tous les composants a) à d).

2. Composition selon la revendication 1 contenant
a) de 13 à 30 % en poids de sels de métaux alcalins et/ou de sels de métaux alcalinoterreux d'acide benzoïque, calculés respectivement comme sels de sodium,
b) de 3 à 7 % en poids de sels de métaux alcalins et/ou de sels de métaux alcalinoterreux d'acides carboxyliques à C₁ à C₃, calculés respectivement comme sels de sodium,
c) de 34 à 53 % d'acide propionique et
d) de 25 à 55 % en poids d'eau.

3. Composition selon la revendication 1 ou la revendication 2 contenant
a) de 13 à 18 % en poids de benzoate de sodium,
b) de 3 à 7 % en poids de propionate de sodium,
c) de 37 à 50 % en poids d'acide propionique,
d) de 45 à 52 % en poids d'eau.

4. Composition selon une ou plusieurs des revendications 1 à 3, **caractérisée en ce que** la composition est une solution claire.

5. Procédé pour la fabrication d'une composition pour la conservation de fourrages, **caractérisé** en ce
i) qu'on fabrique une solution aqueuse avec d) un pourcentage d'eau de > 30 à < 80 % en poids qui contient a) de 5 à 41 % en poids de sels de métaux alcalins et/ou de sels de métaux alcalinoterreux d'acide benzoïque et b) d'1 à 14 % en poids de sels de métaux alcalins et/ou de sels de métaux alcalinoterreux d'acides carboxyliques de C₁ à C₃, calculés respectivement comme sels de sodium et qu'on donne ce mélange
ii) en mélangeant à c) 10 à 59 % d'acide propionique concentré,
la quantité totale de tous les composants a) à d) se montant à 100 % en poids et la somme de b) et c) étant inférieure à 60 % en poids et tous les pourcentages en poids se rapportant à la quantité totale de tous les composants a) à d).

6. Procédé selon la revendication 5, le rapport de mélange de i) à ii) selon le volume étant de 90:10 à 50:50, de préférence de 60:40.

7. Utilisation d'une composition selon les revendications 1 à 3 pour la conservation de fourrages.

8. Utilisation selon la revendication 7, le fourrage étant sélectionné parmi le groupe constitué par du fourrage qui ne fermente pas, en particulier les céréales, les céréales fourragères, les céréales humides avec plus de 14% de taux d'humidité, le foin, le demi-foin, le maïs en grains, les produits de maïs comme les grains de maïs broyés et les fourrages mêlés industriels.

9. Utilisation selon la revendication 7 ou la revendication 8, le fourrage étant protégé contre les champignons de la moisissure, les bactéries et les levures.

10. Utilisation selon une ou plusieurs revendications 7 à 9, 2 à 10 litres de la composition selon les revendications 1 à 4, de préférence 5 litres de la composition, étant utilisés par tonne de fourrage.
